# EUROPÄISCHE PATENTANMELDUNG

(11) **EP 2 602 519 A1**
(43) Veröffentlichungstag der Anmeldung: **12.06.2013**
(21) Anmeldenummer: 11290565.8
(22) Anmeldetag: 05.12.2011
(51) Int. Cl.: F16K 15/14

(54) **Kondensatablassventil**

(71) Anmelder: Behr France Rouffach SAS, 68250 Rouffach (FR)
(72) Erfinder: Mehul, Xavier, 67560 Rosheim (FR); Keller, Peggy, 68540 Bollwiller (FR); Houver, Jérome, 68420 Herrlisheim-près-Colmar (FR)
(74) Vertreter: Grauel, Andreas

(57) **Zusammenfassung**

Die Erfindung betrifft ein Ventil, insbesondere Kondensatablassventil für Klimaanlagen von Kraftfahrzeugen, wobei das Ventil (1) einen Ventilkörper (2) und ein flächiges elastischen Ventilelement (3) und zwei durch den Ventilkörper verbindbare Anschlussbereiche (4,5) aufweist, wobei sich das Ventilelement (3) unter einseitiger Krafteinwirkung (8) derart verformt, dass einen Durchlass zwischen den beiden Anschlussbereichen (4,5) öffnet und sich unter Krafteinwirkung (12) von der entgegengesetzten Seite derart verhält, dass der Durchlass schließt, wobei das Ventilelement (3) an seinem radial äußeren Randbereich im Ventilkörper (2) eingespannt ist und sich über einen Teil seiner radialen Erstreckung am Ventilkörper (2) anlegt, wobei in diesem Bereich der radialen Erstreckung Öffnungen (9) in das Ventilelement (3) eingebracht sind.

## Beschreibung

### Technisches Gebiet

Die Erfindung betrifft ein Ventil, insbesondere ein Kondensatablassventil für Klimaanlagen von Kraftfahrzeugen, nach dem Oberbegriff von Anspruch 1.

### Stand der Technik

Bei Klimaanlagen insbesondere für Kraftfahrzeuge wird die mit Luftfeuchtigkeit beladene Luft am Verdampfer abgekühlt, was dazu führt, dass die Luftfeuchtigkeit am Verdampfer kondensiert und als Kondensat aus der Klimaanlage abgeführt werden muss. Hierzu sind Kondensatablassöffnungen in Klimaanlagen vorgesehen, die mittels beispielsweise Schlauchverbindungen den Austritt des Kondensats im Bereich des Fahrzeugbodens erlauben.

Damit das Kondensat aus der Klimaanlage bzw. aus dem Fahrzeug austreten kann, werden Kondensatablassventile für Klimaanlagen verwendet Eine Ausgestaltung eines solchen Ventiles kann beispielsweise durch ein Kugelventil realisiert werden, dass den Austritt einer Flüssigkeit aus der Klimaanlage erlaubt, einen Eintritt einer Flüssigkeit in die Klimaanlage von außen jedoch verhindert.

Weiterhin sind durch die DE 102008030885 A1 auch Rückschlagventile für Kondenswasser bekannt geworden, die einen Rückschlagventilkörper aufweisen, welcher elastisch ist und zumindest abschnittsweise membranartig ausgebildet ist. Dabei ist der Rückschlagventilkörper mit einem elastischen Befestigungsbolzen verbunden, der mit einem Ventilsitz des Rückschlagventils verbunden ist. Der Rückschlagventilbolzen hält somit den Rückschlagventilschließkörper an dem Ventilsitz, wobei bei einer Kraftbelastung des Ventilschließkörpers durch das oberhalb des Schließkörpers anstehende Kondensat sich der Ventilschließkörper elastisch verformt und von dem Ventilsitz an seinem radial äußeren Bereich abhebt und das Kondenswasser ablässt.

Dadurch wird jedoch ein Kondensatablassventil geschaffen, welches Probleme hinsichtlich der Dauerdichtigkeit aufweist, da durch die große Anlagefläche zwischen dem Schließkörper und dem Ventilsitz bei mangelnder Dauerelastizität des Materials zwangsläufig Undichtigkeiten auftreten.

### Darstellung der Erfindung, Aufgabe, Lösung, Vorteile

Es ist die Aufgabe der Erfindung, ein Ventil zu schaffen, welches zuverlässig und dauerhaltbar funktioniert und dennoch günstig herstellbar ist.

Dies wird erreicht mit den Merkmalen von Anspruch 1, wonach ein Ventil, insbesondere Kondensatablassventil für Klimaanlagen von Kraftfahrzeugen, geschaffen wird, bei welchem das Ventil einen Ventilkörper und ein flächiges elastischen Ventilelement und zwei durch den Ventilkörper verbindbare Anschlussbereiche aufweist, wobei sich das Ventilelement unter einseitiger Krafteinwirkung von der Seite des anstehenden Kondensats derart verformt, dass einen Durchlass zwischen den beiden Anschlussbereichen öffnet und sich unter Krafteinwirkung von der entgegengesetzten Seite derart verhält, dass der Durchlass schließt, wobei das Ventilelement an seinem radial äußeren Randbereich im Ventilkörper eingespannt ist und sich über einen Teil seiner radialen Erstreckung am Ventilkörper anlegt, wobei in diesem Bereich der radialen Erstreckung Öffnungen in das Ventilelement eingebracht sind. Dabei ist es zweckmäßig, wenn der Ventilkörper zumindest zweiteilig ausgebildet ist und das Ventilelement zwischen diesen beiden Teilen des Ventilkörpers eingespannt ist.

Vorteilhaft ist es, wenn der Ventilkörper im Bereich der Anlage des Ventilelements hohl, wie beispielsweise hohlzylindrisch, ausgebildet ist und das Ventilelement im Bereich seiner Öffnungen an einer Stirnfläche des hohlen Ventilkörperbereichs anlegbar ist. Dadurch wird bei Anlage des elastischen Ventilelements an den Ventilkörperbereich der Durchlass verschlossen und bei einem Abstand zwischen dem elastischen Ventilelement und dem Ventilkörperbereich wird der Durchlass geöffnet.

Weiterhin ist es zweckmäßig, wenn der hohl ausgebildete Ventilkörperbereich im Bereich des hohlen Ventilkörperkerns einen Anschlussbereich oder eine Verbindung zum Anschlussbereich ausbildet.

Auch ist es zweckmäßig, wenn der Ventilkörper auf der dem hohlen Bereich abgewandten Seite des Ventilelements einen von dem Ventilelement beabstandeten Ventilkörperbereich aufweist, welcher zumindest eine Ablassöffnung aufweist.

Dabei ist es zweckmäßig, wenn der Ventilkörperbereich käfigartig ausgebildet ist.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: eine Ansicht eines Ausführungsbeispiels eines Kondensatablassventils bei einer Belastung des elastischen Ventilelements von der Innenseite der Klimaanlage,
- Fig. 2: eine Ansicht eines Ausführungsbeispiels des Kondensatablassventils bei einer Belastung des elastischen Ventilelements von der Außenseite der Klimaanlage,
- Fig. 3: eine Ansicht eines Ventilkörperteils mit dem elastischen Ventilelement mit Öffnungen.

### Bevorzugte Ausführung der Erfindung

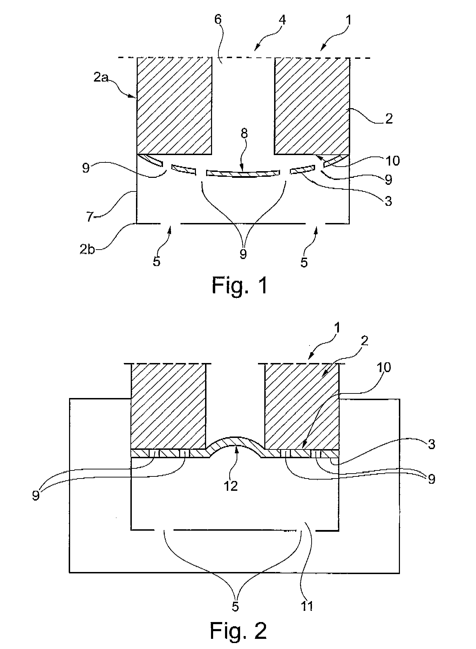

Die Figur 1 zeigt ein erstes Ausführungsbeispiel eines erfindungsgemäßen Kondensatablassventils 1, bei welchem das Kondensatablassventil 1 aus einem Ventilkörper 2 und einem elastischen Ventilelement 3 besteht, wobei das Ventil 1 weiterhin zwei verbindbare Anschlussbereiche 4, 5 aufweist, wobei zwischen den Anschlussbereichen 4, 5 eine Fluidverbindung herstellbar ist, die beim Schließen des Ventiles 1 auch unterbrechbar ist.

Der Ventilkörper 2 ist dabei mit einer zentralen Öffnung oder Bohrung 6 versehen, so dass er eine hohle Struktur in einem ersten Teilbereich 2a des Ventilkörpers 2 aufweist. In einem zweiten Bereich 2b des Ventilkörpers 2 ist der Ventilkörper 2 käfigartig ausgebildet, was in der Figur 1 mit dem Bezugszeichen 7 gekennzeichnet ist.

Das elastische Ventilelement 3, das im Wesentlichen flächig ausgebildet ist, ist bevorzugt an seinem radial äußeren Randbereich im Bereich des Ventilkörpers 2 eingespannt, so dass es dort abgedichtet aufgenommen ist und dicht anliegt. Bevorzugt ist es, wenn das Ventilelement 3 zwischen zwei Teile oder Bereiche 2a,2b des Ventilkörpers 2 eingeklemmt bzw. eingespannt ist und dort elastisch aufgenommen gehalten ist.

Das elastische Ventilelement 3 ist nun gemäß Figur 1 zwischen dem oberen Teil 2a des Ventilkörpers 2 und dem unteren Teil 2b des Ventilkörpers 2 eingespannt und kann entweder am unteren Endbereich des Ventilkörpers 2 an seiner Stirnfläche 10 eben anliegen oder das flächige elastische Ventilelement 3 ist auf Grund einer Krafteinwirkung, in Figur 1 von oben dargestellt, von der Stirnseite des Bereiches 2 beabstandet. Die Kraftwirkung von oben auf das elastische Ventilelement ist mit dem Pfeil 8 gekennzeichnet. Das elastische Ventilelement 3 weist an seinem flächigen Bereich eine Anzahl Öffnungen 9 auf, wobei im Falle, dass das elastische Ventilelement 3 an der Stirnfläche 10 des Ventilkörpers 2 anliegt, diese Öffnungen verschlossen sind und der Durchgang zwischen dem Anschlussbereich 4 zu dem Anschlussbereich 5 daher verschlossen ist.

Die Figur 1 zeigt, dass eine Wassersäule, die oberhalb des elastischen Ventilelementes 3 durch den Anschlussbereich 4 auf das Ventilelement 3 drückt, dieses Ventilelement 3 verformen kann, so dass die Öffnungen 9 im elastischen Ventilelement 3 von der Stirnfläche 10 des Ventilkörpers 2 abheben und damit den Durchgang 4-5 freigeben.

Die Figur 2 zeigt eine Betriebssituation des Kondensatablassventiles 1, bei der von unten durch die Anschlussbereiche 5 beispielsweise Wasser in einen Hohlraum 11 des Ventilkörpers eindringen kann, wobei dadurch eine Kraftwirkung 12 auf das elastische Ventilelement 3 in Richtung nach oben ausgeübt wird, welche das elastische Ventilelement 3 mit den Öffnungen 9 gegen die Stirnfläche 10 des Ventilkörpers 2 beaufschlagt. Dadurch wird der Durchlass zwischen dem Anschlussbereich 4 und dem Anschlussbereich 5 verschlossen, weil das Ventilelement gegen den Dichtsitz der Stirnfläche beaufschlagt wird.

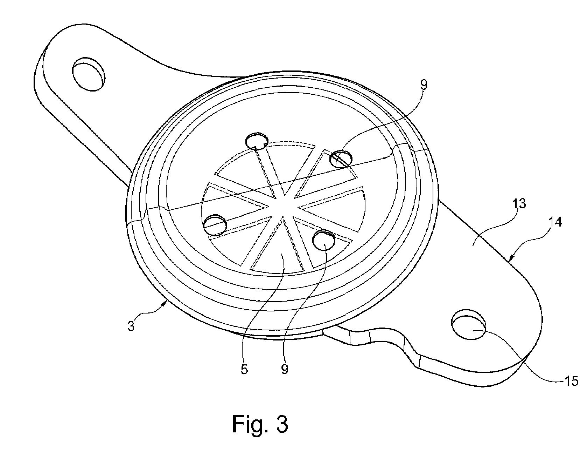

Die Figur 3 zeigt ein elastisches Ventilelement 3, das auf einem Ventilkörperbereich 13 aufliegt kann, der Öffnungen 5 aufweist, durch die das Kondensat oder Wasser durchströmen kann, nachdem es von oben in das Ventil 1 eingeströmt ist. Zu erkennen sind auch die Öffnungen 9, die als runde Öffnungen im mittleren radialen Bereich des kreisförmigen elastischen Ventilelementes 3 angeordnet sind.

Das Element 13, in Figur 1 auch mit dem Bezugszeichen 2b versehen, wird an einem Ventilkörperelement, vorzugsweise dem Element 2a, gemäß Figur 1 befestigt und dadurch kann in vorteilhafter Weise das elastische Ventilelement 3 zwischen dem Bereich 13 und dem Ventilkörperelement 2 eingespannt werden.

Durch die Ausgestaltung des elastischen Elementes 3 gemäß der Figur 3 mit einem käfigartigen Ventilkörperelement 13 ist es möglich, das Ventilelement 3 mit dem Element 13 in einfacher Weise an ein hohles Ventilkörperelement 2a anzuordnen, wobei dieses Ventilelement 2a mit einer Stirnfläche 10 versehen ist und mit einem Durchlass, derart, dass dieses Ventilkörperelement 2a durchaus auch integraler Bestandteil eines Klimaanlagengehäuses sein kann oder mit diesem verbindbar ist.

Bevorzugt ist es, wenn der Ventilkörper 2 im Bereich der Anlage des Ventilelementes 3 etwa hohlzylindrisch ausgebildet ist, so dass der zentrale Durchlass 6 dabei beispielsweise rund ausgebildet ist, wobei die Stirnfläche 10 dann in diesem Ausführungsbeispiel als kreisringförmige Fläche umgesetzt sein kann.

Wie in Figur 3 zu erkennen ist, weist das käfigartige Ventilkörperelement 13 zwei Zungen 14 auf, die von einem etwa kreisringförmigen zentralen Element seitlich gegenüberliegend abstehen. Mittels dieser zwei Zungen 14 und mittels der Öffnungen 15 in den Zungen 14 und mit weiteren nicht dargestellten Haltermitteln kann das Ventilkörperelement 13 an dem Ventilkörperbereich 2 befestigt werden.

### Bezugszeichenliste

- 1: Kondensatablassventil, Ventil
- 2: Ventilkörper
- 2a: Ventilkörperbereich
- 2b: Ventilkörperbereich
- 3: Ventilelement
- 4: Anschlussbereich, Einlass
- 5: Anschlussbereich, Auslass
- 6: Öffnung, Bohrung
- 7: Ventilkörperbereich
- 8: Kraftwirkung
- 9: Öffnung
- 10: Stirnfläche
- 11: Hohlraum
- 12: Kraftwirkung
- 13: Ventilkörperbereich, Ventilkörperelement
- 14: Zungen
- 15: Öffnungen

## Patentansprüche

1. Ventil, insbesondere Kondensatablassventil für Klimaanlagen von Kraftfahrzeugen, wobei das Ventil (1) einen Ventilkörper (2) und ein flächiges elastischen Ventilelement (3) und zwei durch den Ventilkörper verbindbare Anschlussbereiche (4,5) aufweist, wobei sich das Ventilelement (3) unter einseitiger Krafteinwirkung (8) derart verformt, dass einen Durchlass zwischen den beiden Anschlussbereichen (4,5) öffnet und sich unter Krafteinwirkung (12) von der entgegengesetzten Seite derart verhält, dass der Durchlass schließt, **dadurch gekennzeichnet, dass** das Ventilelement (3) an seinem radial äußeren Randbereich im Ventilkörper (2) eingespannt ist und sich über einen Teil seiner radialen Erstreckung am Ventilkörper (2) anlegt, wobei in diesem Bereich der radialen Erstreckung Öffnungen (9) in das Ventilelement (3) eingebracht sind.

2. Ventil nach Anspruch 1, **dadurch gekennzeichnet, dass** der Ventilkörper (2) im Bereich der Anlage des Ventilelements (3) hohl, wie beispielsweise hohlzylindrisch, ausgebildet ist und das Ventilelement (3) im Bereich der Öffnungen (9) an einer Stirnfläche (10) des hohlen Ventilkörperbereichs (2a) anlegbar ist.

3. Ventil nach Anspruch 2, **dadurch gekennzeichnet, dass** der hohl ausgebildete Ventilkörperbereichs (2a) im Bereich des hohlen Ventilkörperkerns (6), wie einer Bohrung, einen Anschlussbereich (4) oder eine Verbindung zum Anschlussbereich (4) ausbildet.

4. Ventil nach Anspruch 2 oder 3, **dadurch gekennzeichnet, dass** der Ventilkörper (2) auf der dem hohlen Bereich abgewandten Seite des Ventilelements (3) einen von dem Ventilelement (3) beabstandeten Ventilkörperbereich (2b) aufweist, welcher zumindest eine Ablassöffnung (5) aufweist.

5. Ventil nach Anspruch 4, **dadurch gekennzeichnet, dass** der Ventilkörperbereich (2b) käfigartig ausgebildet ist.
